# EUROPEAN PATENT SPECIFICATION

(11) **EP 1 849 651 B1**
(45) Date of publication and mention of the grant of the patent: **28.07.2010**
(21) Application number: 07106711.0
(22) Date of filing: 23.04.2007
(51) Int. Cl.: B60N 2/38

(54) **Seat for earth-moving machines or the like**
Sitz für Erdbaumaschinen oder Ähnliches
Siège pour machines de terrassement ou similaires

(30) Priority: 27.04.2006 IT TO20060312
(43) Date of publication of application: 31.10.2007
(73) Proprietor: Webasto Product Italy S.p.A., 20060 Colturano (MI) (IT)
(72) Inventor: Barbisan, Cornelio, 20031, Cesano Maderno (MI) (IT)
(74) Representative: Dini, Roberto

(56) References cited:
- EP-A- 1 361 104
- DE-A1- 3 243 747
- DE-B- 1 063 912

## Description

The present invention relates to a seat for earth-moving machines or the like according to the preamble of claim 1.

The present invention applies to earth-moving machines, e.g. excavators, as well as to other similar work machines used for moving different materials.

These machines are often equipped with an operator's cab, inside of which there is an operator's seat. Usually, the walls of the cab are made basically of a transparent material, while the roof of the cab is at least partly made of a non-transparent material; typically, the front portion of the roof is made of a transparent material, whereas the rear portion of the roof is made of a non-transparent material.

The present invention applies to those cases wherein an operator using, for example, an earth-moving machine needs to locate a certain quantity of earth much higher than the roof of the operator's cab; in such a case, on the one hand the roof (or at least the portion thereof made of a non-transparent material) may block the operator's view, while on the other hand the operator is forced to keep his head in an uncomfortable position, i.e. inclined backwards.

At present, the only things that an operator can do in order to gain a better view of the location above the cab are getting up from the seat and getting closer to the cab windscreen or else leaning sideways, e.g. by shifting his centre of gravity while still remaining seated in the seat. However, these movements prevent the operator from actuating the controls properly and from ensuring the necessary attention and safety during the operation.

At present, earth-moving machines are known being equipped with swivelling seats that provide the operator with a visual field of approximately 360° while still keeping the seat plane substantially parallel to the floor of the cab. Forward and backward translatable seats are also known, which can be moved in a substantially straight direction along suitable guides, for example, as well as horizontally tilting seats which allow at least one end of the seat cushion to be lifted or lowered, or height-adjustable seats, i.e. seats which can be moved upwards and downwards in a substantially vertical direction through, for example, mechanic or pneumatic means. Also known are seats having a tip-up backrest, i.e. wherein the backrest can be tilted independently of the cushion, thus providing a plurality of angles between the backrest and the cushion. This possibility of tilting the backrest allows the operator to find the most comfortable angle between the cushion and the backrest.

However, the arrangements known in the art do not allow to solve the above-mentioned problem of poor visibility and uncomfortable work position in an effective manner, and certainly do not allow to find an easy solution thereto while still ensuring that the operator can keep the machine safely in control.

European patent application EP 1361104 A discloses a mechanism for height adjustable seat and steering wheel, in particular for armoured vehicle. The seat is hinged to the vehicle body by means of a seat frame which keeps raised the seat. Rotation of the seat frame performs tilting of the seat.

US patent n. 4,739,959 A discloses a seat comprising a seat frame which can move horizontally by means of rails and which can be inclined by means of a lever mechanism acting on the rails.

The general object of the present invention is therefore to solve the above-described problem.

Said object is substantially achieved through a seat incorporating the features set out in the appended claims.

The present invention also relates to an earth-moving machine or the like comprising a corresponding seat.

The present invention is based on the idea of providing a seat tilting movement to be typically achieved while the operator is seated in the seat; of course, the tilting movement must be such that it affects the stability neither of the seat nor of the operator. In this way, the view angle of the operator seated in the seat inside the cab can be easily shifted upwards while still allowing the operator to keep his body and his head in a comfortably angled position.

This tilting movement may advantageously be provided by at least one electric motor; the electric motor makes it easier for the operator to perform frequent position changes while using the machine, therefore ensuring higher machine safety and seat comfort.

The seat may also advantageously be lowered slightly when tilted; thus, the operator seated in the tilted position can operate the work machine pedals more easily. Further features and advantages of the present invention will become apparent from the following description, provided as a non-limiting example and referring to the annexed drawings, wherein:
Fig.1 is a tridimensional view of a preferred embodiment example of the seat according to the present invention;
Fig.2 is a side view of the seat of Fig.1 in the normal position;
Fig.3 is a side view of the seat of Fig.1 in the tilted position;
Fig.4 shows schematic representations of the view angle allowed to an operator in two operating positions of the seat of Fig.1;
Fig.5 is a schematic side view of an embodiment example of the suspension means of a seat according to the present invention.

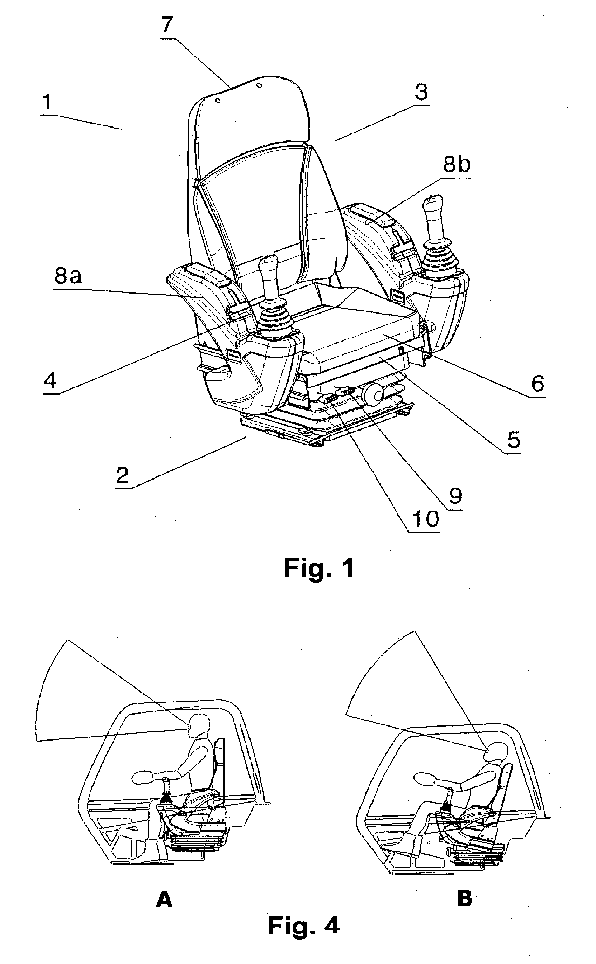

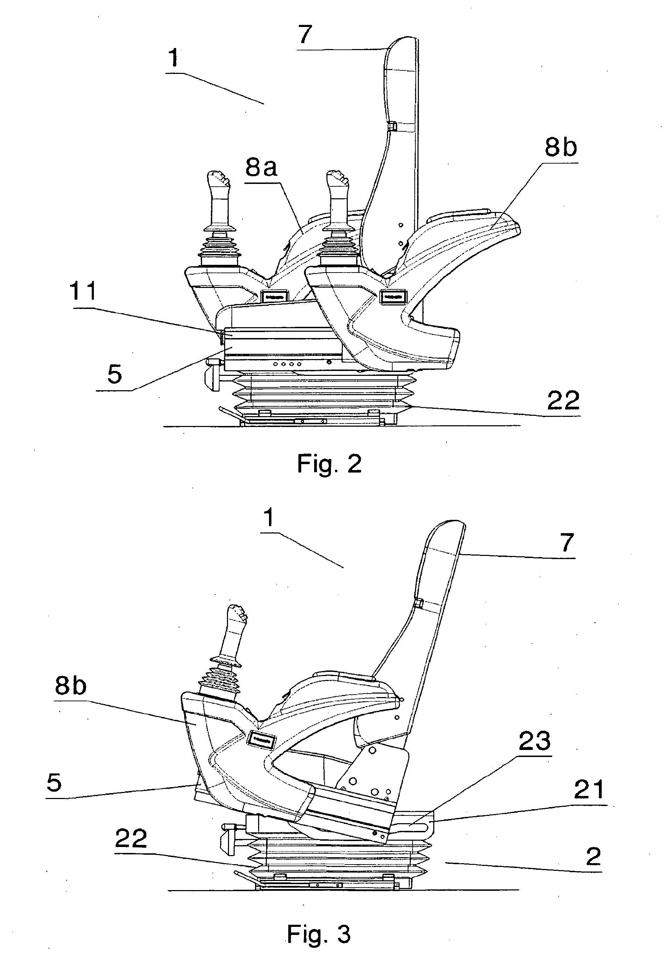

Referring now to the annexed drawings, it can be noticed that Fig.1 shows a seat 1 according to the present invention, which comprises a base 2 adapted to be secured to the floor (schematically indicated by a horizontal line in Fig.2 and Fig.3) of a cab and a seat assembly 3.

The base 2 comprises a lower part 22, enclosed in a bellows-type covering, for the driving elements of the seat assembly 3; the bellows-type covering is typically made of an elastic, flexible and deformable material (e.g. rubber or plastic material) being also resistant to motion-induced wear. The base 2 also comprises an upper part 21 mounted on the lower part 22 for guiding the motion of the seat assembly 3. In particular, the part 21 can translate in a vertical direction relative to the part 22, i.e. vertically relative to the floor, as will become more apparent later.

The seat assembly 3 comprises a frame 5, a cushion 6, a backrest 7, a first armrest 8a and a second armrest 8b.

The frame 5, according to the illustrated embodiment example, is a structure comprising two elongated side members (made of extruded aluminium) joined together by means of one or more cross members (some of which are external and others internal); one of these external cross members can be seen in Fig.1 (designated by reference number 5) at the front edge of the cushion 6; one of the two side members can be seen in Fig.2 (designated by reference number 5) and is fitted with a guide 11, in particular for its entire length; the other side member is substantially similar to the first one.

The cushion 6 is typically made of an elastic material which can be deformed under the weight of an operator, such as foam rubber or another foam material adapted to provide the operator with softness and/or comfort. The cushion 6 is fixedly mounted to the frame 5.

The backrest 7 is typically made of the same material as the cushion 6; the backrest 7 is rotatably mounted to the frame 5, so that the backrest 7 can be tilted relative to the frame 5 and therefore to the cushion 6.

Both armrests 8a and 8b are slideably mounted to the frame 5, in particular on guides obtained on the frame itself. In the illustrated example, the guides 11 are obtained from the side members of the frame 5 and, in particular, are straight.

Fig.2 is a side view of the seat of Fig.1, wherein the backrest 7 is in a position being substantially perpendicular to the floor as well as to the cushion 6 (i.e. it is not tilted). Also, in Fig.2 the armrest 8b is shown in the rearmost position. The possibility of changing the armrest position typically helps the operator to sit down or to get up from the seat more easily. Also, the possibility of changing the armrest position allows both short and tall operators to reach the controls and handlers on the armrest comfortably.

Fig.3 is a side view of the seat according to the present invention, wherein the seat assembly 3 is in the backward tilted position relative to the base 2 and therefore to the floor of the cab. The cushion 6, being integral with the frame 5 of the seat assembly 3, is also tilted backwards by the same angle as the tilting angle of the frame 5. As far as the backrest 7 is concerned, it remains in the same position relative to the cushion 6 (i.e. not tilted in relation to it), but turns out to be tilted backwards by the same angle as the tilting angle of the frame 5. In said figure, the armrest 8b is in the foremost position, thus being substantially aligned with the armrest 8a (not shown).

Fig.4 shows some schematic representations of the view angle allowed to the operator seated in the seat of Fig.1.

View A corresponds to an untilted operating position of the seat assembly 3, which is typically used when driving the work machine or for low earth-moving operations; the view angle is directed substantially horizontally.

View B corresponds to a backward tilted operating position of the seat assembly 3, which is typically used for high earth-moving operations; the view angle is directed upwards; the seat assembly is also shifted a little forwards. As this view clearly shows, the operator can without difficult and comfortably, without straining his head, keep watching areas and objects located well above the cab. Furthermore, the forward shifting of the seat prevents both the backrest from touching the rear cab wall and the cab roof, more specifically the non-transparent portion thereof, from interfering with the view angle.

In Fig.1, under the external cross member of the frame 5 there are two levers 9 and 10. The lever 9 is used (when operated manually) for translating the front edge of the cushion 6 vertically upwards and downwards (depending on its position). The lever 10 is used (when operated manually) for translating the rear edge of the cushion 6 vertically upwards and downwards (depending on its position). The cushion 6 as a whole cannot translate vertically relative to the frame 5.

As to the tilting movement of the frame 5 relative to the base 2, in the illustrated example it is achieved by means of guides (e.g. slots) obtained in the upper part 21 of the base 2. The upper part 21 is equipped, on both sides of the seat (i.e. on the right and on the left), with a first guide (not shown) and a second guide 23 (partially shown in Fig.3) in which corresponding pins (or wheels) obtained on the side members of the frame 5 can slide. The first guide is used for a front pin (not shown) of the side member, and comprises a first substantially straight section followed by an upward-turned section; the second guide 23 is used for a rear pin (not shown) of the side member, and comprises a first substantially straight section followed by a downward-turned section. When the pins of the frame 5 slide in the guides of the base 2, the frame 5 (and thus the seat assembly 3) performs a backward tilting movement relative to the base 2; in particular, said movement comprises a forward translation followed by a backward rotation by about 15°. Thanks to the particular shape of the guides, the frame 5, and thus the seat assembly 3, is not lifted much from the base 2; if desired or required, this slight lifting, e.g. by a few centimetres, may be compensated for through suspension means, as clarified later.

In the illustrated embodiment example, said tilting movement of the seat assembly 3 is motorized, although the driving units are not shown in the drawings. Alternatively, said movement may be provided through pneumatic elements.

In general, an embodiment of the seat for earth-moving machines or the like according to the present invention comprises a base and a seat assembly; it also comprises tilting means adapted to provide a backward tilting movement of the seat assembly relative to the base in order to allow the seat assembly to be adjusted in at least two operating positions.

More in detail, the seat assembly comprises a frame, a cushion, a backrest and at least one side armrest; generally, a seat assembly according to an embodiment of the present invention comprises two side armrests, one on the right-hand side and one on the left-hand side of the seat. In particular, the cushion may be mounted to the frame in such a way that it can translate vertically, i.e. so that the cushion can be moved up or down in order to allow the operator to adjust the cushion position according to his comfort and/or physical and/or operational needs. Moreover, the cushion may be fitted with first translation means adapted to translate a first end of the cushion vertically and/or with second translation means adapted to translate a second end of the cushion. Said first and second translation means allow the cushion to be inclined slightly, e.g. in order to make it more comfortable.

The backrest may be mounted to the frame so that it can be tilted, i.e. in such a way that it can be moved angularly forwards and backwards so that the operator can change the inclination of the backrest according to his comfort and/or physical and/or operational needs.

The armrests may be mounted to the frame in such a way that they can be translated horizontally, i.e. so that at least one armrest can be moved forwards or backwards. Since the dimensions of the cab are typically small, the possibility for the operator to remove or reduce the obstacle represented by the armrest when he wants to take his place in the seat is a great advantage.

The base comprises tilting means which may be driven electrically, in particular through at least one electric motor; said electric motor is typically located inside the base and is connected electrically to controls which are preferably located on one armrest and which can be actuated manually by the operator.

As said, the seat assembly according to the present invention is subject to a tilting movement; said tilting movement may comprise a rotation of said seat assembly about a substantially horizontal axis and possibly and advantageously also a forward translation of said seat assembly in a substantially horizontal direction; advantageously, said tilting movement may additionally comprise a downward translation of said seat assembly in a substantially vertical direction.

According to a further embodiment of the present invention, the forward translation of the seat assembly advantageously precedes its rotation; this means that an operator wanting to shift his view angle well above the roof of the cab will first actuate the control that allows to move the seat assembly forwards, and then will actuate the control that allows to rotate the seat assembly backwards away from the base.

Advantageously, according to an embodiment of the present invention, the downward translation takes place before or at the beginning of the rotation, and before, at the beginning of, during, at the end of, or after the forward translation, so that the operator's feet won't lose touch with the pedals of the work machine because of said rotation; the downward translation may also be actuated by the operator through a suitable control.

It is worth noting that, according to the present invention, it is possible for the operator to achieve the tilting movement (rotation with possible forward and/or downward translations) by means of a single control, e.g. a push-button or a lever located on an armrest of the seat.

As said, the dimensions of the cab of a machine according to the present invention are small, and therefore the forward translation is useful for the purpose of moving the backrest away from the rear cab wall by a distance being sufficient to prevent the rotation from being hindered by the wall of the cab wall itself. Also, the forward translation of the seat assembly helps the operator get closer to the windscreen of the machine cab, thereby further improving the operator's view, which otherwise might be blocked by the roof of the cab which, as said, is typically not wholly transparent.

On the contrary, when the operator has finished the task requiring a change of the position of the seat assembly, he will actuate the control that allows to rotate the seat assembly forwards towards the base and then, if necessary, will actuate the control that moves the seat assembly backwards.

Advantageously, the movement of the seat assembly may be made to be dependent on the actuation of a control by the operator; in other words, if an actuation is performed there will be a movement, whereas if no actuation is performed there will be no movement; in this way, the operator can adjust the seat assembly to any intermediate position of the travel associated with its tilting movement (in particular, a sequential combination of a translation and a rotation).

The axis of rotation and the direction of translation of the seat assembly are typically substantially perpendicular to each other.

According to a further embodiment of the present invention, the seat assembly can preferably be rotated by an angle between 10° and 20°, more preferably by an angle of about 15°.

The base of a seat according to the present invention advantageously comprises suspension means adapted to adjust the damping characteristics of said seat assembly; this is typically useful for providing always the same seat sprimging independently of the operator's weight. Said suspension means may comprise springs with electrically adjustable compression and/or extension damping, in particular said adjustment being provided through an electric motor typically placed inside the base and electrically connected to controls preferably located on an armrest and being manually controllable by the operator.

As an alternative, said spring adjustment may be carried out manually by the operator by means of a knob located on the base.

In general, the operator will use the controls located on the armrest (in particular the controls for tilting the seat assembly and for adjusting the suspension of the seat assembly) whenever he needs to change the position and/or the suspension setting of the seat assembly during operational phases of the machine (typically for moving earth or other materials) without endangering his own and safety of others; on the contrary, during non-operational phases, the operator will be allowed to use controls or actuators available in other locations without any risks.

The adjustment of said suspension means affects the seat damping quality when the machine is driven, for example, on bumpy ground, as well as the height of the seat assembly from the base, and therefore the height of its cushion from the floor of the cab.

Advantageously, the height adjustment through suspension means of the seat assembly allows an operator in the tilted position to reach the machine controls, such as accelerator, brake and clutch, more easily. As a matter of fact, by reducing the spring preload the springs will extend, and the seat assembly, under the operator's weight, will be more springy, e.g. by a few centimetres, thus getting closer to the base and therefore to the floor of the cab, where the accelerator, brake and clutch controls are typically located.

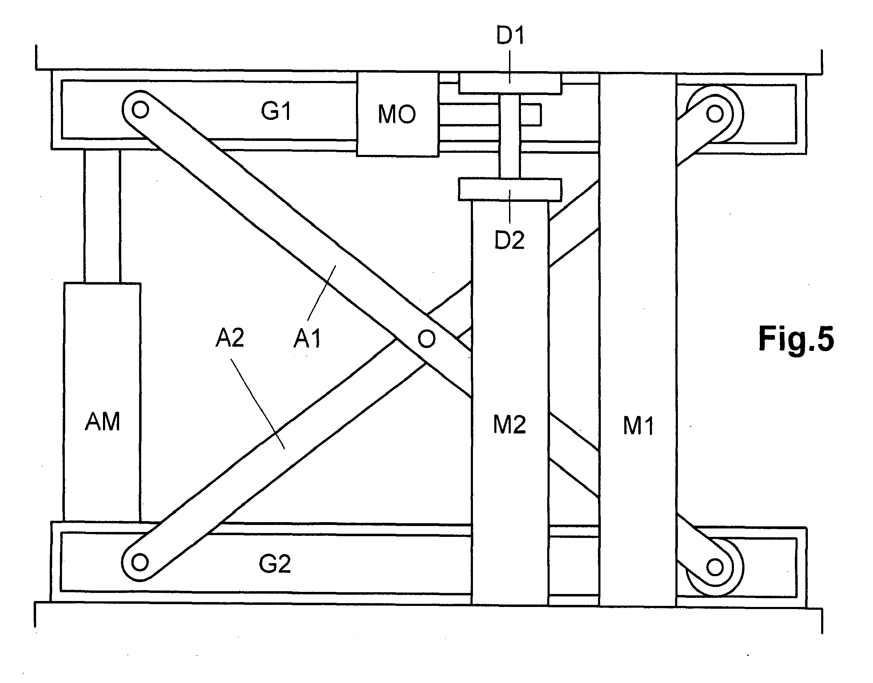

An embodiment example of suspension means for a seat 1 according to the present invention is shown schematically in Fig.5.

Said means are placed under the cushion 6 of the seat 1, in particular within the bellows which is clearly visible in Fig.2 and Fig.3.

In the embodiment example of Fig.5, said suspension means comprise four guides: two upper guides G1 (of which only one is shown in Fig. 5, since this is a side view) and two lower guides G2 (of which only one is shown in Fig.5, since it is a side view); one of the upper guides G1 is on the right-hand side of the cushion 6 of the seat 1 (i.e. the one shown in Fig.5), while the other upper guide G1 is on the left-hand side of the cushion 6 of the seat 1 (i.e. the one not shown in Fig.5); one of the lower guides G2 is on the right-hand side of the cushion 6 of the seat 1 (i.e. the one shown in Fig.5), while the other lower guide G2 is on the left-hand side of the cushion 6 of the seat 1 (i.e. the one not shown in Fig.5).

The upper guides G1 are directly or indirectly secured, for example, to the upper part 21 of the base 2 of the seat 1, whereas the lower guides G2 are directly or indirectly secured, for example, to the lower part 22 of the base 2 of the seat 1.

In the embodiment example of Fig.5, said suspension means comprise two scissors-articulated systems, one on the right-hand side of the cushion 6 (i.e. the one shown in Fig.5) and one on the left-hand side of the cushion 6 (i.e. the one not shown in Fig.5). Each scissors-articulated system comprises two rods A1 and A2 hinged on one end to the upper guide G1 and to the lower guide G2, respectively; also, the rods are hinged to each other approximately at their centre; finally, both rods A1 and A2 have on the respective other ends a wheel adapted to slide in the two guides G2 and

G1, respectively.

In the embodiment example of Fig.5, said suspension means comprise at least one spring M1 (or an equivalent device, shown schematically in the drawing) adapted to apply its elastic force in a vertical direction, e.g. between the lower part 22 and the upper part 21 of the base 2. Alternatively, said means comprise two or three or four springs M1 located, for example, on the right, left, front and rear sides of the cushion 6 of the seat 1.

In the embodiment example of Fig.5, said suspension means comprise at least one shock absorber AM adapted to damp the vibrations caused by the spring(s) M1.

To adjust the damping of the suspension means, the embodiment example of Fig.5 utilizes at least one spring M2 (or an equivalent device, shown schematically in the drawing) adapted to apply its elastic force in a vertical direction, e.g. between the lower part 22 and the upper part 21 of the base 2, and featuring electrically adjustable compression and/or extension damping; in particular, the spring M2 of Fig.2 features compression damping adjustment. As an alternative, said means comprise two or three or four springs M2 located, for example, on the right, left, front and rear sides of the cushion 6 of the seat 1.

The seat damping is thus provided by at least one non-adjustable spring M1 and at least one electrically adjustable spring M2; the non-adjustable portion of the elastic force exerted on the seat assembly preferably corresponds to at least 60-66%, more preferably to at least 70-75%, of the overall elastic force.

The adjustment of the spring M2 is provided through an electric motor MO and a movable mechanism driven by the electric motor MO. In particular, there is a worm screw arranged vertically and having one end constrained to an upper disc D1, which is directly or indirectly secured, for example, to the upper part 21 of the base 2 of the seat 1; there is also a lower disc D2 which is coupled to the worm screw and moves downwards or upwards as the screw is turned in a direction or in an opposite direction; the lower disc acts, for example, on one end of the spring M2, thereby compressing it depending on its position and thus changing its elastic force; the worm screw is turned by the output shaft of the electric motor MO. The operator can in this manner control the suspension means.

According to an embodiment of the present invention, the adjustment of the suspension means is also used for temporarily changing the height of the seat assembly, e.g. in relation to the floor of a machine cab, during the backward tilting movement of the seat assembly.

Of course, the embodiment example of Fig.5 offers many alternatives.

The above description has already referred to the possibility of changing the number of springs M1 and M2 and of providing the springs M2 with electrically adjustable compression and/or extension damping.

It is now worth mentioning that one or more springs M1 and M2 may even be arranged horizontally or inclined, provided that suitable mechanical linkages are used for transmitting the elastic force vertically.

It is also worth mentioning that the system comprising a worm screw driven by an electric motor may be replaced with other types of linear actuators driven by electric motors. The electric motor of the suspension means is fed in relation to one or more user commands, so that the user can adjust the damping and possibly also the temporary translation of the seat assembly combined with the backward tilting movement of same.

## Claims

1. Seat (1) for earth-moving machines or the like, comprising
a base (2),
a seat assembly (3) comprising a cushion (6) mounted to a frame (5), and
tilting means adapted to provide a backward tilting movement of the seat assembly (3) relative to the base (2) in order to allow the seat assembly (3) to be adjusted in at least two operating positions,
**characterized in that** said frame (5) comprises pins or wheels adapted to slide in guides (23) obtained in said base (2), said guides being shaped so that sliding of the pins or wheels, in the guides performs said backward tilting movement.

2. Seat (1) according to claim 1, wherein said tilting movement comprises a rotation of said seat assembly (3) about a substantially horizontal axis.

3. Seat (1) according to claim 2, wherein said rotation takes place by an angle between 10° and 20°, preferably by an angle of about 15°.

4. Seat (1) according to claim 1, wherein said tilting movement comprises a forward translation of said seat assembly (3) in a substantially horizontal direction.

5. Seat (1) according to claims 2 and 4, wherein said translation precedes said rotation.

6. Seat (1) according to claims 2 and 4 or according to claim 5, wherein said axis of rotation and said direction of translation are substantially perpendicular to each other.

7. Seat (1) according to claim 1, wherein said tilting movement comprises a downward translation of said seat assembly (3) in a substantially vertical direction.

8. Seat (1) according to claims 2 and 4 and 7, wherein said tilting means are adapted to perform said downward translation:
- before or at the beginning of said rotation,
and
- before, at the beginning of, during, at the end of, or after said forward translation.

9. Seat (1) according to claim 1, wherein said tilting means are driven electrically, in particular through at least one electric motor.

10. Seat (1) according to claim 9, wherein said tilting means are controlled manually by an operator.

11. Seat (1) according to claim 1, wherein said base (2) comprises suspension means adapted to adjust the damping of said seat assembly (3).

12. Seat (1) according to claim 11, wherein the setting of said suspension means affects the height of said seat assembly (3) relative to said base (2).

13. Seat (1) according to claim 11 or 12, wherein said suspension means comprise springs, said springs featuring electrically adjustable compression and/or extension damping.

14. Seat (1) according to claim 12 or 13, wherein said suspension means are controlled manually by an operator.

15. Seat (1) according to claim 1, wherein said seat assembly (3) further comprises a backrest (7), an armrest (8a), and preferably another armrest (8b).

16. Seat (1) according to claim 15, wherein said cushion (6) is mounted to said frame (5) so that it can be translated vertically.

17. Seat (1) according to claim 15, wherein said backrest (7) is mounted to said frame (5) so that it can be rotated and thus tilted.

18. Seat (1) according to claim 15, wherein said armrest (8a) is mounted to said frame (5) so that it can be translated horizontally.

19. Seat (1) according to claims 10 and 14, comprising controls (4) placed on an armrest (8a) of said seat assembly (3) for controlling said tilting means and said suspension means manually.

20. Earth-moving machine comprising a seat according to any of the preceding claims.

## Patentansprüche

1. Sitz (1) für Erdbaumaschinen oder dergleichen, mit
einem Sockel (2),
einer Sitz-Anordnung (3), die ein Kissen (6) aufweist, welches auf einem Rahmen (5) montiert ist, und
Neige-Mittel, die dazu eingerichtet sind, eine Neigebewegung der Sitz-Anordnung (3) in Rückwärtsrichtung relativ zu dem Sockel (2) vorzusehen, um die Einstellung der Sitz-Anordnung (3) in mindestens zwei Betriebs-Positionen zu ermöglichen,
**dadurch gekennzeichnet, dass** der Rahmen (5) Stifte oder Räder aufweist, die dazu eingerichtet sind, in Führungen (23) zu gleiten, welche in dem Sockel (2) enthalten sind, wobei die Führungen so ausgeformt sind, dass das Gleiten der Stifte oder Räder in den Führungen die Rückwärts-Neigebewegung vollführt.

2. Sitz (1) nach Anspruch 1, wobei die Neige-Bewegung eine Rotation der Sitz-Anordnung (3) um eine im Wesentlichen horizontale Achse aufweist.

3. Sitz (1) nach Anspruch 2, wobei die Rotation um einen Winkel von zwischen 10° und 20° stattfindet, vorzugsweise um einen Winkel von ca. 15°.

4. Sitz (1) nach Anspruch 1, wobei die Neige-Bewegung eine vorwärtsgerichtete Translation der Sitz-Anordnung (3) in einer im Wesentlichen horizontalen Richtung aufweist.

5. Sitz (1) nach den Ansprüchen 2 und 4, wobei die Translation der Rotation vorausgeht.

6. Sitz (1) nach Ansprüchen 2 und 4 oder nach Anspruch 5, wobei die RotationsAchse und die Richtung der Translation im Wesentlichen senkrecht zueinander sind.

7. Sitz (1) nach Anspruch 1, wobei die Neige-Bewegung eine abwärtsgerichtete Translation der Sitz-Anordnung (3) in einer im Wesentlichen vertikalen Richtung aufweist.

8. Sitz (1) gemäß der Ansprüche 2 und 4 und 7, wobei die Neige-Mittel dazu eingerichtet sind, die abwärts gerichtete Translation zu vollführen:
- vor oder zu Beginn der Rotation,
und
- vor, zu Beginn, während, zum Ende, oder nach dem Ende der vorwärtsgerichteten Translation.

9. Sitz (1) gemäß Anspruch 1, wobei die Neige-Mittel elektrisch angetrieben sind, insbesondere mittels mindestens einem elektrischen Motor.

10. Sitz (1) gemäß Anspruch 9, wobei die Neige-Mittel manuell von einem Bediener gesteuert werden.

11. Sitz (1) gemäß Anspruch 1, wobei der Sockel (2) Feder-Mittel aufweist, die zur Einstellung der Dämpfung der Sitz-Anordnung (3) eingerichtet sind.

12. Sitz (1) gemäß Anspruch 11, wobei das Einstellen der Feder-Mittel die Höhe der Sitz-Anordnung (3) relativ zu dem Sockel (2) beeinflusst.

13. Sitz (1) gemäß Anspruch 11 oder 12, wobei die Feder-Mittel Federn aufweisen, wobei die Federn eine elektrisch einstellbare Kompressions- und/oder Extensions-Dämpfung umfassen.

14. Sitz (1) gemäß Anspruch 12 oder 13, wobei die Feder-Mittel manuell von einem Bediener gesteuert werden.

15. Sitz (1) gemäß Anspruch 1, wobei die Sitz-Anordnungen (3) weiterhin eine Rückenlehne (7), eine Armlehne (8a) und vorzugsweise eine weitere Armlehne (8b) aufweisen.

16. Sitz (1) gemäß Anspruch 15, wobei das Kissen (6) derart an dem Rahmen (5) montiert ist, dass es vertikal versetzt werden kann.

17. Sitz (1) gemäß Anspruch 15, wobei die Rückenlehne (7) derart an dem Rahmen (5) montiert ist, dass sie rotiert und somit geneigt werden kann.

18. Sitz (1) gemäß Anspruch 15, wobei die Armlehne (8a) derart an dem Rahmen (5) montiert ist, dass sie horizontal versetzt werden kann.

19. Sitz (1) gemäß den Ansprüchen 10 und 14, mit Steuerungen (4), die auf einer Armlehne (8a) der Sitz-Anordnung (3) platziert sind, um die Neige-Mittel und die Feder-Mittel manuell zu steuern.

20. Erdbaumaschine mit einem Sitz gemäß einem der vorstehenden Ansprüche.

## Revendications

1. Siège (1) pour machines de terrassement ou similaires, comprenant :
une base (2),
un ensemble de siège (3) comprenant un coussin (6) monté sur un châssis (5), et
des moyens d'inclinaison adaptés pour fournir un mouvement de basculement vers l'arrière de l'ensemble de siège (3) par rapport à la base (2) afin de permettre à l'ensemble de siège (3) d'être réglé dans au moins deux positions de travail,
**caractérisé en ce que** ledit châssis (5) comporte des broches ou des roues adaptées pour coulisser dans des guides (23) obtenus dans ladite base (2), lesdits guides étant configurés de façon que le coulissement des broches ou des roues dans les guides exécute le mouvement de basculement vers l'arrière.

2. Siège (1) selon la revendication 1, dans lequel ledit mouvement de basculement comporte une rotation dudit ensemble de siège (3) autour d'un axe essentiellement horizontal.

3. Siège (1) selon la revendication 2, dans lequel ladite rotation a lieu suivant un angle compris entre 10° et 20°, de préférence un angle de 15° environ.

4. Siège (1) selon la revendication 1, dans lequel ledit mouvement de basculement comprend une translation vers l'avant dudit ensemble de siège (3) dans une direction essentiellement horizontale.

5. Siège (1) selon les revendications 2 et 4, dans lequel ladite translation précède ladite rotation.

6. Siège (1) selon les revendications 2 et 4 ou selon la revendication 5, dans lequel ledit axe de rotation et ladite direction de translation sont essentiellement perpendiculaires l'un par rapport à l'autre.

7. Siège (1) selon la revendication 1, dans lequel ledit mouvement de basculement comprend une translation vers le bas dudit ensemble de siège (3) dans une direction essentiellement verticale.

8. Siège (1) selon les revendications 2 et 4 et 7, dans lequel lesdits moyens d'inclinaison sont adaptés pour exécuter ladite translation vers le bas :
- avant ou au début de ladite rotation,
et
- avant, au début de, pendant, à la fin de, ou après ladite translation vers l'avant.

9. Siège (1) selon la revendication 1, dans lequel lesdits moyens d'inclinaison sont commandés électriquement, en particulier par l'intermédiaire d'au moins un moteur électrique.

10. Siège (1) selon la revendication 9, dans lequel lesdits moyens d'inclinaison sont commandés manuellement par un opérateur.

11. Siège (1) selon la revendication 1, dans lequel ladite base (2) comprend des moyens de suspension adaptés pour régler l'amortissement dudit ensemble de siège (3).

12. Siège (1) selon la revendication 11, dans lequel le réglage des moyens de suspension affecte la hauteur dudit ensemble de siège (3) par rapport à ladite base (2).

13. Siège (1) selon la revendication 11 ou 12, dans lequel lesdits moyens de suspension comportent des ressorts, lesdits ressorts caractérisant un amortissement par compression et/ou extension réglable électriquement.

14. Siège (1) selon la revendication 12 ou 13, dans lequel lesdits moyens de suspension sont commandés manuellement par un opérateur.

15. Siège (1) selon la revendication 1, dans lequel ledit ensemble de siège (3) comprend, de plus, un dossier (7), un accoudoir (8a) et, de préférence, un autre accoudoir (8b).

16. Siège (1) selon la revendication 15, dans lequel ledit coussin (6) est monté sur ledit châssis (5) de sorte qu'il puisse être translaté verticalement.

17. Siège (1) selon la revendication 15, dans lequel ledit dossier (7) est monté sur ledit châssis (5) de telle sorte qu'il puisse être tourné et ainsi basculé.

18. Siège (1) selon la revendication 15, dans lequel ledit accoudoir (8a) est monté sur ledit châssis (5) de façon qu'il puisse être translaté horizontalement.

19. Siège (1) selon les revendications 10 et 14, comprenant des commandes (4) placées sur un accoudoir (8a) dudit ensemble de siège (3) pour commander manuellement lesdits moyens d'inclinaison et lesdits moyens de suspension.

20. Machine de terrassement comprenant un siège selon l'une quelconque des revendications précédentes.
